# EUROPEAN PATENT SPECIFICATION

(11) **EP 3 340 077 B1**
(45) Date of publication and mention of the grant of the patent: **17.04.2019**
(21) Application number: 17207154.0
(22) Date of filing: 13.12.2017
(51) Int. Cl.: G06F 16/583, G06F 16/9535

(54) **METHOD AND APPARATUS FOR INPUTTING EXPRESSION INFORMATION**
VERFAHREN UND VORRICHTUNG ZUR EINGABE VON EXPRESSIONSINFORMATIONEN
PROCÉDÉ ET APPAREIL D'ENTRÉE D'INFORMATIONS D'EXPRESSION

(30) Priority: 20.12.2016 CN 201611188433
(43) Date of publication of application: 27.06.2018
(73) Proprietor: Beijing Xiaomi Mobile Software Co., Ltd., Beijing 100085 (CN)
(72) Inventor: CHEN, Shuai, Beijing, Beijing 100085 (CN); LIU, Tiejun, Beijing, Beijing 100085 (CN); ZHANG, Xiangyang, Beijing, Beijing 100085 (CN)
(74) Representative: Hughes, Andrea Michelle

(56) References cited:
- WO-A2-2016/014597
- US-A1- 2014 192 134
- US-A1- 2015 052 462
- US-A1- 2015 220 774
- US-A1- 2015 242 679
- US-A1- 2016 241 500

## Description

### TECHINICAL FIELD

The present disclosure relates to the field of social media application technology, and more particularly, to a method and apparatus for inputting expression information.

### BACKGROUND

As the use of social chatting software continues to increase, a large number of emoticons are provided in a terminal for a user to choose, so that the user, during chatting, can choose appropriate emoticons to vividly express the user's mood. US 2016/241500 A1 (BOSTICK JAMES E [US] ET AL) discloses using an image of a user to provide an emotion icon for display together with text information. A library is used to determine a particular emotion, in turn, an emotion icon.

### SUMMARY

The object of the invention is solved by the features of the independent claims. Further embodiments are the subject-matter of the dependent claims. In order to overcome the problems in the related art, the present disclosure provides a method and apparatus for inputting expression information.

According to a first aspect of embodiments of the present disclosure, there is provided a method for inputting expression information. The method includes: acquiring target feature information of a user, the target feature information including at least one of the following items: facial feature information and limb feature information; acquiring target expression information corresponding to the target feature information; and inputting the target expression information.

In some embodiments, the acquiring target feature information of a user may include: acquiring target information, the target information including at least one of the following items: first image information and audio information; and acquiring the target feature information from the target information.

In some embodiments, the acquiring target information may include: acquiring the target information through a capturing device; or acquiring the target information through a selection by the user from a local database.

In some embodiments, the method may further include: acquiring a target database, the target database including a correspondence relationship between feature information of the user and expression information, wherein the acquiring the target expression information corresponding to the target feature information may include acquiring the target expression information corresponding to the target feature information based on the target database.

In some embodiments, the target expression information may include any one of the following items: expression icon information, expression symbol information, second image information, wherein the second image information is acquired based on the first image information.

In some embodiments, the method may further include: determining whether the target database includes a correspondence relationship between the target feature information and the target expression information, wherein the acquiring the target expression information corresponding to the target feature information may include: using the first image information as the second image information to obtain the target expression information or processing the first image information to obtain the second image information and using the second image information as the target expression information in the case that the target database does not comprise a correspondence relationship between the target feature information and the target expression information.

In some embodiments, the processing the first image information to obtain the second image information and using the second image information as the target expression information may include: acquiring a model image selected by the user; synthesizing the first image information and the model image to obtain the second image information; and synthesizing the first image information and the model image to obtain the second image information; and.

In some embodiments, the synthesizing the first image information and the model image to obtain the second image information may include: extracting feature information of the user from the first image information; and adding the feature information of the user to an image area selected by the user in the model image.

In some examples, the processing the first image information to obtain the second image information and using the second image information as the target expression information may include: acquiring image parameters of the first image information; and adjusting the image parameters to target parameters set by the user in order to obtain the second image information and using the second image information as the target expression information.

According to a second aspect of embodiments of the present disclosure, there is provided an apparatus for inputting expression information. The apparatus includes: a first acquisition module configured to acquire target feature information of a user, the target feature information including at least one of the following items: facial feature information and limb feature information; a second acquisition module configured to acquire target expression information corresponding to the target feature information; and a second acquisition module configured to acquire target expression information corresponding to the target feature information.

In some embodiments, the first acquisition module may include: a first acquisition sub-module configured to acquire target information, the target information including at least one of the following items: first image information and audio information; and a second acquisition sub-module configured to acquire the target feature information from the target information.

In some embodiments, the first acquisition sub-module may be configured to acquire the target information through a capturing device or acquiring the target information through a selection by the user from a local database.

In some embodiments, the apparatus may further include: a third acquisition module configured to acquire a target database, the target database including a correspondence relationship between feature information of the user and expression information, wherein the second acquisition module is configured to acquire the target expression information corresponding to the target feature information based on the target database.

In some embodiments, the target expression information may include any one of the following items: expression icon information, expression symbol information, second image information, wherein the second image information is acquired based on the first image information.

In some embodiments, the apparatus may include: a determination module configured to determine whether the target database includes a correspondence relationship between the target feature information and the target expression information, wherein the second acquisition module is configured to use the first image information as the second image information to obtain the target expression information or process the first image information to obtain the second image information and use the second image information as the target expression information in the case that the target database does not comprise a correspondence relationship between the target feature information and the target expression information.

In some embodiments, the second acquisition module may be configured to acquire a model image selected by the user, synthesize the first image information and the model image to obtain the second image information, and use the second image information as the target expression information.

In some embodiments, the second acquisition module may be configured to extract feature information of the user from the first image information, and add the feature information of the user to an image area selected by the user in the model image.

In some examples, the second acquisition module may be configured to acquire image parameters of the first image information, adjust the image parameters to target parameters set by the user in order to obtain the second image information and use the second image information as the target expression information.

According to a third aspect of embodiments of the present disclosure, there is provided an apparatus for inputting expression information. The apparatus includes: a processor; a memory for storing instructions executable by the processor, wherein the processor is configured to: acquire target feature information of a user, the target feature information including at least one of the following items: facial feature information and limb feature information; acquire target expression information corresponding to the target feature information; and acquire target expression information corresponding to the target feature information.

According to a fourth aspect of embodiments of the present disclosure, there is provided a non-transitory computer readable storage medium including instructions thereon, which, when executed by a processor of a mobile terminal, cause the mobile terminal to perform a method of inputting expression information, the method includes: acquire target feature information of a user, the target feature information including at least one of the following items: facial feature information and limb feature information; acquire target expression information corresponding to the target feature information; and acquire target expression information corresponding to the target feature information.

The technical solutions provided by the embodiments of the present disclosure may attain the following beneficial effects: by acquiring target feature information of a user, the target feature information including at least one of the following items: facial feature information and limb feature information, acquiring target expression information corresponding to the target feature information, and acquiring target expression information corresponding to the target feature information, it is able to solve a technical problem of low efficiency of inputting expression information in the related art.

It is to be understood that both the foregoing general descriptions and the following detailed descriptions are exemplary and explanatory only and do not limit the scope of the disclosure.

### BRIEF DESCRIPTION OF THE DRAWINGS

The drawings herein are incorporated in and constitute a part of this specification, showing embodiments consistent with the present disclosure, and together with the descriptions, serve to explain the principles of the present disclosure.
Figure 1 is a flow chart of a method for inputting expression information according to an exemplary embodiment;
Figure 2 is a flow chart of another method for inputting expression information according to an exemplary embodiment;
Figure 3 is a flow chart of yet another method of inputting expression information according to an example;
Figure 4 is a block diagram of a first apparatus for inputting expression information according to an exemplary embodiment;
Figure 5 is a block diagram of a second apparatus for inputting expression information according to an exemplary embodiment;
Figure 6 is a block diagram of a third apparatus for inputting expression information according to an exemplary embodiment;
Figure 7 is a block diagram of a fourth apparatus for inputting expression information according to an exemplary embodiment; and
Figure 8 is a block diagram of a fifth apparatus for inputting expression information according to an exemplary embodiment.

### DETAILED DESCRIPTION

Hereinafter, exemplary embodiments will be described in detail, examples of which are shown in the drawings. In the following descriptions when referring to the drawings, the same numerals in the different drawings denote the same or similar elements unless otherwise indicated. The embodiments described in the following exemplary embodiments are not representative of all embodiments consistent with the present disclosure. Rather, they are merely examples of apparatuses and methods consistent with some aspects of the present disclosure as detailed in the appended claims.

The present disclosure can be applied to a scenario in which information is inputted, for example, a scenario in which a user wants to input information when chatting or making a speech or the like by a terminal (e.g., a mobile phone). Inr such a scenario, the user often tends to vividly express the user's current mood by inputting expression information. For example, when smiling face expression information is inputted, it indicates that the user is being happy currently, and when tear expression information is inputted, it indicates that the user is being sad currently, among others. In the related art, a large number of expression information is pre-stored in a terminal, and when the user wants to input an emoticon consistent with the user's current mood, the user need to look up one by one in a list of the number of expression information, which consumes a lot of time to search and has low efficiency of inputting information.

In order to solve the above-mentioned problem, the present disclosure provides a method and an apparatus for inputting expression information. The method, by acquiring target feature information of a user, the target feature information including at least one of the following items: facial feature information and limb feature information, acquiring target expression information corresponding to the target feature information, and acquiring target expression information corresponding to the target feature information, is able to avoid that a large amount of time for searching is required in related art to input expression information and thus can solve a technical problem of low efficiency of inputting expression information.

The present disclosure will now be described in detail with reference to specific examples.

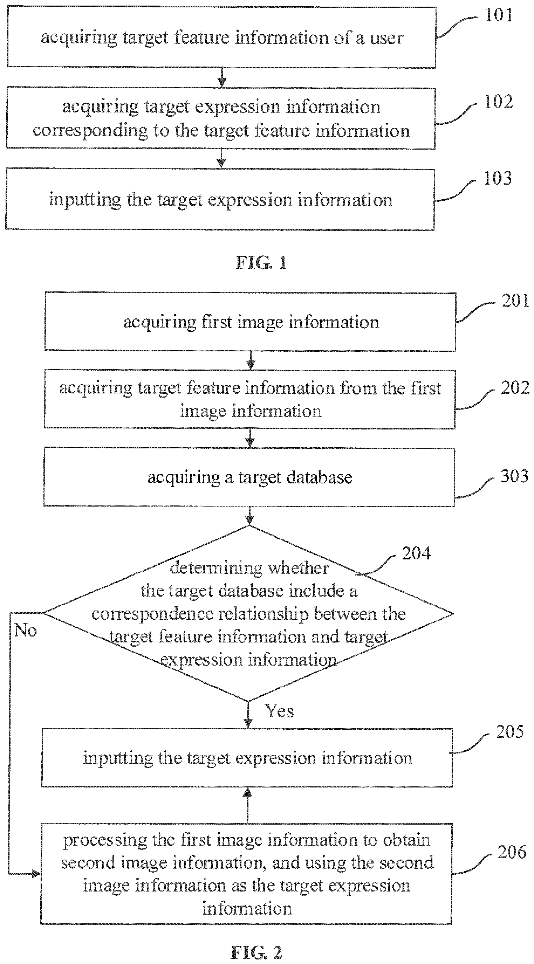

Figure 1 is a flow chart of a method for inputting expression information according to an exemplary embodiment. As shown in Figure 1, the method can be applied in a terminal and include the following steps.

In step 101, target feature information of a user is acquired.

The target feature information includes at least one of the following items: facial feature information and limb feature information.

In this step, target information can be acquired firstly. The target information includes at least one of the following items: first image information and audio information. Then, the target feature information is acquired from the target information.

In step 102, target expression information corresponding to the target feature information is acquired.

The target expression information includes any of the following items: expression icon information, expression symbol information, and second image information. The expression icon information may be a static expression picture or a dynamic expression picture. The expression symbol information may be a text which is a pattern consisting of punctuation marks and/or English letters for representing an expression. The second image information is acquired based on the first image information. The above examples are merely illustrative and the present disclosure is not limited thereto.

In step 103, the target expression information is inputted.

In this step, the target expression information may be inputted in an input area, which may be an input box for inputting expression information or text information. After the target expression information is inputted to the input box, the target expression information can be sent out. For example, in the scenario of chatting, the target expression information can be sent to a partner; in the scenario of browsing page (such as Xiaomi forum), the target expression information representing personal views on relevant news or posts can be published; in the sense of updating personal home page (such as Moments in WeChat or microblog), the target expression information can be uploaded. The above examples are just examples, and the present disclosure is not limited thereto.

The above discussed method, it can avoid the need for a large amount of time for searching to input expression information and thus can solve a technical problem of low efficiency of inputting expression information by acquiring target feature information of a user, the target feature information including at least one of the following items: facial feature information and limb feature information, acquiring target expression information corresponding to the target feature information, and inputting the target expression information.

Figure 2 is a flow chart of a method for inputting expression information according to an exemplary embodiment. As shown in Figure 2, the target information in the present embodiment is described by taking a first image information as an example, and the method includes the following steps.

In step 201, first image information is acquired.

In this step, the first image information can be acquired by either acquiring the first image information through a capturing device or acquiring the first image information through a selection by the user from a local database.

In an example, when a user wants to input expression information, the user may click an expression input key on an input keypad, upon which a camera in the terminal is started to capture the user's facial image information or limb image information (i.e., the first image information). Alternatively, the user's facial image information or limb image information (i.e., the first image information) may be acquired through selection from an album (i.e. local database) in the terminal. The facial image information may include an image of morphologic and/or position of respective facial organs, such as a grimace image, and the limb image information may include an image of actions on respective limbs, such as a thumb up image, for example. The examples are illustrative only and the present disclosure is not intended to be limited thereto.

In step 202, target feature information is acquired from the first image information.

The target feature information may include at least one of the following items: facial feature information and limb feature information. As an example, in the case that the acquired first image information is facial image information, it is possible for the terminal to acquire morphologic and position of respective facial organs on the user's face and extract the target feature information based on variation of respective facial organs. The variation of respective facial organs may include changes in morphologic and position of eyebrows, eyes, eyelids, mouth, nose and other organs, such as eyebrows bent down, mouth down, brow wrinkled together, eyes wide-opened, nose bulged, cheek lifted and other changes. In the case that the acquired first image information is limb image information, the target feature information may include an action on respective limbs (actions made by hands, elbows, arms, hip, feet and other parts), for example, hands rubbing to show anxiety, breast beating to show pain, head lowering down to show depression, and feet stamping to show angry. The examples are illustrative only and the present disclosure is not intended to be limited thereto.

In step 203, a target database is acquired.

The target database includes a correspondence relationship between feature information identifying the user and expression information. The expression information may be a large number of pre-stored expression patterns (such as for happiness, sadness, fear, aversion, and the like). The feature information may include facial feature information and limb feature information, and the method for acquiring the feature information may be obtained by reference to the step 201 and its description will be omitted. In an example, a facial image pattern may be acquired through a camera and facial feature information extracted from the facial image pattern may indicate smiling, so in such case the facial feature information about smiling can be used to establish a correspondence relationship with expression information representing a smiling face. In another example, a limb image pattern may be acquired through a camera and limb feature information extracted from the limb image pattern may indicate breast beating, so in such case the limb feature information about breast beating can be used to establish a correspondence relationship with expression information representing pain. In another example, a facial image pattern may be acquired through selection from an album and facial feature information extracted from the facial image pattern may indicate tongue sticking out, so in such case the facial feature information about tongue sticking out can be used to establish a correspondence relationship with expression information representing naughtiness. As such, the acquired target feature information can be matched with the feature information stored in the target database in a subsequent step to obtain the target expression information.

In step 204, it is determined whether the target database includes a correspondence relationship between the target feature information and target expression information.

In this step, a determination as to whether the target database includes a correspondence relationship between the target feature information and target expression information may be made by any of the following two methods.

In the first method, matching degree of the target feature information and respective feature information stored in the target database is acquired, and in the case that the matching degree is greater than or equal to a preset threshold value, it is determined that the feature information corresponding to the matching degree is a matched feature information and the expression information corresponding to the feature information is target feature information, and thus it is determined that the target database includes the correspondence relationship between the target feature information and target expression information. In the case that the matching degree is smaller than the preset threshold value, it is determined that the target database does not include the correspondence relationship between the target feature information and target expression information.

In the second method, matching degree of the target feature information and respective feature information stored in the target database is acquired. The acquired matching degrees are ordered in a descending order to determine the maximum matching degree. In the case that the maximum matching degree is greater than or equal to a preset threshold value, it is determined that the feature information corresponding to the maximum matching degree is a matched feature information and the expression information corresponding to the feature information is target feature information, and thus it is determined that the target database includes the correspondence relationship between the target feature information and target expression information. In the case that the maximum matching degree is smaller than the preset threshold value, it is determined that the target database does not include the correspondence relationship between the target feature information and target expression information.

As can be seen from the above descriptions, the first method compares respective acquired matching degree with the preset threshold value and determines that the feature information corresponding to the matching degree is a matched feature information and the expression information corresponding to the feature information is target feature information if the matching degree is greater than or equal to the preset threshold value, so if there are a plurality of matching degrees each of which is greater than or equal to the preset threshold value, a plurality of target expression information can be acquired; the second method selects, after obtaining a plurality of matching degrees, a maximum one therefrom and compares the maximum one with the preset threshold value, and determines that the feature information corresponding to the maximum matching degree is a matched feature information and the expression information corresponding to the feature information is target feature information if the maximum matching degree is greater than or equal to the preset threshold value.

If it is determined that the target database includes the correspondence relationship between the target feature information and target expression information, then step 205 is performed.

If it is determined that the target database does not include the correspondence relationship between the target feature information and target expression information, then step 206 is performed.

In step 205, the target expression information is inputted.

The target expression information may include any of the following items: expression icon information and expression symbol information. The expression icon information may be a static expression picture or a dynamic expression picture. The expression symbol information may be a text which is a pattern consisting of punctuation marks and/or English letters for representing an expression. The above examples are merely illustrative and the present disclosure is not limited thereto.

In this step, the target expression information may be inputted in an input box for inputting expression information or text information. After the target expression information is inputted to the input box, the target expression information can be sent out. For example, in the scenario of chatting, the target expression information can be sent to a partner; in the scenario of browsing page (such as Xiaomi BBS), the target expression information representing personal views on relevant news or posts can be published; in the sense of updating personal home page (such as Moments in WeChat or microblog), the target expression information can be uploaded.

It is to be noted that if there are a plurality of matching degrees greater than or equal to the preset threshold values in step 204, a plurality of target expression information can be acquired, and at this time, the terminal cannot determine which target expression information should be inputted. In order to solve the problem, in an embodiment of the present disclosure, the terminal can display all the obtained plurality of target expression information in a presentation box to the user for selection and after the user determines the desired target expression information, the terminal inputs the target expression information selected by the user. In another embodiment of the present disclosure, the terminal can also input all the obtained target expression information into the input box. In order to further improve interaction between the user and the terminal, it is also possible in the present embodiment that the user may make deletion from all the target expression information inputted in the input box to determine right target expression information for sending out. The above examples are merely illustrative and the present disclosure is not limited thereto.

In step 206, the first image information is processed to obtain a second image information, and the second image information is used as the target expression information.

In some embodiments, processing the first image information to obtain a second image information and using the second image information as the target expression information may be implemented through any of the following two methods.

In the first method, a model image selected by the user is acquired, the first image information is synthesized into the model image to obtain the second image information, and the second image information is used as the target expression information. In some embodiments, feature information of the user is extracted from the first image information, and the feature information of the user is added to an image area selected by the user in the model image. The model image may be a preset image template, in which the user's feature information may be added. For example, when the model image is a kitten lacking eyes and mouth and the extracted user features are pout and blinking, the user features of pout and blinking are set to positions corresponding to the mouth and eyes of the kitten. In another example, when the model image is Snake White lacking eyebrows and mouth and the extracted user features are eyebrows bent down and mouth up, the user features of eyebrows bent down and mouth up are set to positions corresponding to eyebrows and mouth of the Snake White. In yet another example, when the model image is Donald Duck lacking legs and the extracted user features are jumping with legs, the features of jumping with leg are set in the positions corresponding to the legs of Donald Duck. The above examples are illustrative only and the present disclosure is not limited thereto.

In the second method, image parameters of the first image information is acquired, the image parameters are adjusted to target parameters set by the user in order to obtain the second image information and the second image information is used as the target expression information. The image parameters can include color of the image, or size or position of respective facial features in the image. In an example, when the image parameters in the acquired first image information include size of the eyes and color of the lips, the terminal may adjust the size of the eyes and the color of the lips to obtain second image information and use the second image information as the target expression information. In another example, when the image parameters in the acquired first image information include color of the skin and shape of the face, the terminal may adjust the color of the skin and shape of the face to obtain second image information and use the second image information as the target expression information. In yet another example, when the image parameters in the acquired first image information indicate colorful image, the terminal may adjust the image to be white and black to obtain second image information and use the second image information as the target expression information. The above examples are illustrative only and the present disclosure is not limited thereto.

In order to further reduce processing operations on the image by the user, the first image information may be used as the second image information so as to obtain the target expression information in some examples. For example, when the acquired first image information is an image including hands waving to say goodbye, the image including hands waving to say goodbye can be directly used as the target expression information, by which the user's experience can be improved.

After the target expression information is determined, the step 205 is performed.

With the method, it is possible to avoid the need for a large amount of time for searching to input expression information and thus the method can solve a technical problem of low efficiency of inputting expression information by acquiring target feature information of a user, the target feature information including at least one of the following items: facial feature information and limb feature information, acquiring target expression information corresponding to the target feature information, and acquiring target expression information corresponding to the target feature information.

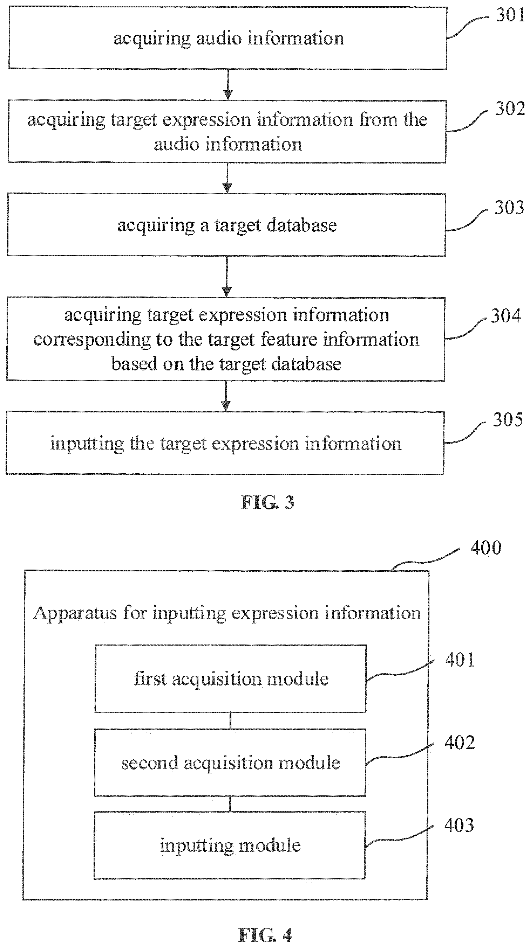

Figure 3 is a flowchart of a method for inputting expression information according to an exemplary example. As shown in Figure 3, the target information is described by taking audio information as an example and the method may include the following steps.

In step 301, audio information is acquired.

In this step, the audio information can be acquired by either acquiring the audio information through a capturing device or acquiring the audio information through a selection by the user from a local database.

In an example, when a user wants to input expression information, the user may click an expression input key on an input keypad, upon which a microphone in the terminal is started to capture the user's audio information. Alternatively, the audio information may be acquired through selection of the user from a music library or recorded sound bank (i.e. local database) in the terminal.

In step 302, target feature information is acquired from the audio information.

The target feature information may include at least one of the following items: facial feature information and limb feature information.

In some examples, the terminal converts the audio information into textual information, extracts textual features from the textual information.

The textual features may include various words indicating feelings (such as pleasure, sadness, anger, panic, etc.) and may include auxiliary words indicating manner of speaking at end of respective sentences (such as Ah, Uh, Wow, Er, yeah, Ho and so on). The terminal can also extract from the audio information voice parameters such as tone, loudness and timbre and the like. As such, the terminal can acquire the target feature information from the textual features and/or the voice parameters. In an example, in the case that the textual feature is "haha", the target feature information is a smile (i.e., facial feature information). In another example, in the case that the textual feature is "yeah", the target feature information is two fingers in a 'V' (i.e., limb feature information). The above examples are illustrative only and the present disclosure is not limited thereto.

In step 303, a target database is acquired.

The target database includes a correspondence relationship between feature information identifying the user and expression information. The expression information may be a large number of pre-stored expression patterns (such as for happiness, sadness, fear, aversion, and the like). In some examples, an audio information model of the user may be captured in advance by using a microphone or selected by the user from a local database and is converted to a text information model, and textual features (such as various words indicating feelings and auxiliary words indicating manner of speaking) are extracted from the text information model in order to establish a correspondence relationship between the text features and preset feature information (i.e., facial feature information and limb feature information). In some examples, voice parameters such as tone, loudness and timbre or the like can be acquired directly from the audio information model and used to establish a correspondence relationship between the voice parameters and preset feature information.

In an example, an audio information model is acquired through a microphone and is converted into a text information model, and textual features such as happy, joyful or pleased are extracted from the text information model, so in such case the text features are used to established a correspondence relationship with facial feature information or limb feature information representing happiness, and the facial feature information or limb feature information is used to established a correspondence relationship with expression information indicating a smiling face.

In another example, an audio information model is acquired through a microphone and is converted into a text information model, and textual features such as sad, grieved or sorrowful are extracted from the text information model, so in such case the text features are used to established a correspondence relationship with facial feature information or limb feature information representing sadness, and the facial feature information or limb feature information is used to established a correspondence relationship with expression information indicating sadness.

In yet another example, an audio information model is acquired through a microphone and voice parameters such as tone, loudness and timbre are extracted from the audio information model, so in such case the voice parameters are used to established a correspondence relationship with corresponding facial feature information or limb feature information, and the facial feature information or limb feature information is used to established a correspondence relationship with corresponding expression information. As such, the acquired target feature information can be matched with the feature information stored in the target database in a subsequent step to obtain the target expression information.

In step 304, target expression information corresponding to the target feature information is acquired based on the target database.

Acquiring target expression information corresponding to the target feature information may be implemented by any of the following two methods.

In the first method, matching degree of the target feature information and respective feature information stored in the target database is acquired, and in the case that the matching degree is greater than or equal to a preset threshold value, it is determined that the preset feature information corresponding to the matching degree is the target feature information and the expression information corresponding to the preset feature information is the target feature information.

In the second method, matching degree of the target feature information and respective feature information stored in the target database is acquired. The acquired matching degrees are ordered in a descending order to determine the maximum matching degree. In the case that the maximum matching degree is greater than or equal to a preset threshold value, it is determined that the preset feature information corresponding to the maximum matching degree is the target feature information and the expression information corresponding to the feature information is the target feature information.

As can be seen from the above descriptions, the first method compares respective acquired matching degree with the preset threshold value and determines that the preset feature information corresponding to the matching degree is a target preset feature information and the expression information corresponding to the target preset feature information is the target feature information if the matching degree is greater than or equal to the preset threshold value, so if there are a plurality of matching degrees each of which is greater than or equal to the preset threshold value, a plurality of target expression information can be acquired; the second method selects, after obtaining a plurality of matching degrees, a maximum one therefrom and compares the maximum one with the preset threshold value, and determines that the preset feature information corresponding to the maximum matching degree is a target preset feature information and the expression information corresponding to the target preset feature information is the target feature information if the maximum matching degree is greater than or equal to the preset threshold value.

In addition, if acquiring the target expression information corresponding to the target feature information based on the target database fails, the terminal may display a prompt box for presenting prompt information to the user to remind the user to re-input audio information. The prompt information may include text information such as "Expression match failed, please re-input". The prompt information can also be displayed in the form of voice to the user. The sound can be set in advance, and for example, can be set to a piece of voice speaking "input failure", or a piece of music, a prompt sound or the like. The present disclosure does not limit the specific sound settings. In addition, the prompt information may also be prompted by the terminal's breath light or flash light, for example, by the frequency of light emission of the breathing light or flash light, or the color of the breath light, and among others.

In step 305, the target expression information is inputted.

The target expression information may include any of the following items: expression icon information and expression symbol information. The expression icon information may be a static expression picture or a dynamic expression picture. The expression symbol information may be a text which is a pattern consisting of punctuation marks and/or English letters for representing an expression. The above examples are merely illustrative and the present disclosure is not limited thereto.

The target expression information may be inputted in an input box for inputting expression information or text information. After the target expression information is inputted to the input box, the target expression information can be sent out. For example, in the scenario of chatting, the target expression information can be sent to a partner; in the scenario of browsing page (such as Xiaomi BBS), the target expression information representing personal views on relevant news or posts can be published; in the sense of updating personal home page (such as Moments in WeChat or microblog), the target expression information can be uploaded.

It is to be noted that if there are a plurality of matching degrees greater than or equal to the preset threshold values in step 304, a plurality of target expression information can be acquired, and at this time, the terminal cannot determine which target expression information should be inputted. In order to solve the problem, in an embodiment of the present disclosure, the terminal can display all the obtained plurality of target expression information in a presentation box to the user for selection and after the user determines the desired target expression information, the terminal inputs the target expression information selected by the user. In another embodiment of the present disclosure, the terminal can also input all the obtained target expression information into the input box. In order to further improve interaction between the user and the terminal, it is also possible in the present embodiment that the user may make deletion from all the target expression information inputted in the input box to determine right target expression information for sending out. The above examples are merely illustrative and the present disclosure is not limited thereto

With the method, it is able to avoid that a large amount of time for searching is required in related art to input expression information and thus can solve a technical problem of low efficiency of inputting expression information by acquiring target feature information of a user, the target feature information including at least one of the following items: facial feature information and limb feature information, acquiring target expression information corresponding to the target feature information, and acquiring target expression information corresponding to the target feature information.

Figure 4 is a block diagram of an apparatus for inputting expression information according to an exemplary embodiment. As shown in Figure 4, the apparatus includes a first acquisition module 401, a second acquisition module 402, and an input module 403.

The first acquisition module 401 is configured to acquire target feature information of a user. The target feature information includes at least one of the following items: facial feature information and limb feature information.

The second acquisition module 402 is configured to acquire target expression information corresponding to the target feature information.

The input module 403 is configured to input the target expression information.

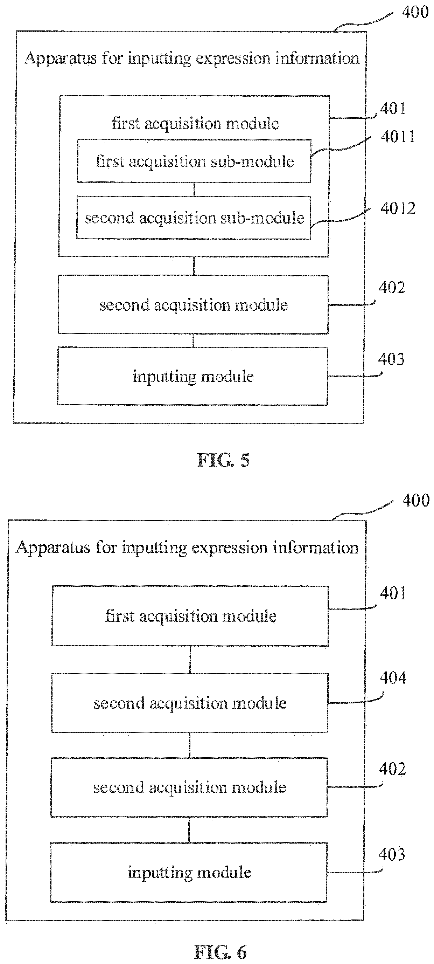

In some embodiments, Figure 5 is a block diagram of an apparatus for inputting expression information as shown in the embodiment of Figure. 4. The first acquisition module 401 may include a first acquisition sub-module 4011 configured to acquire target information. The target information includes at least one of the following items: first image information and audio information; and a second acquisition sub-module 4012 configured to acquire the target feature information from the target information.

In some embodiments, the first acquisition sub-module 4011 may be configured to acquire the target information through a capturing device or acquire the target information through a selection by the user from a local database.

In some embodiments, Figure 6 is a block diagram of an apparatus for inputting expression information as shown in the embodiment of Figure 4. The apparatus may further include: a third acquisition module 404 configured to acquire a target database, the target database including a correspondence relationship between feature information of the user and expression information. The second acquisition module 402 is configured to acquire the target expression information corresponding to the target feature information based on the target database.

In some embodiments, the target expression information may include any one of the following items: expression icon information, expression symbol information, second image information. The second image information is acquired based on the first image information.

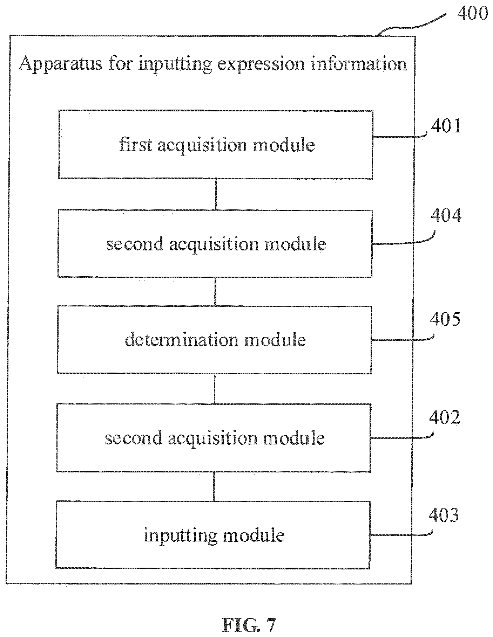

In some embodiments, Figure 7 is a block diagram of an apparatus for inputting expression information as shown in the embodiment of Figure 4. The apparatus may further include: a determination module 405 configured to determine whether the target database includes a correspondence relationship between the target feature information and the target expression information. The second acquisition module 402 is configured to use the first image information as the second image information to obtain the target expression information or process the first image information to obtain the second image information and use the second image information as the target expression information in the case that the target database does not comprise a correspondence relationship between the target feature information and the target expression information.

In some embodiments, the second acquisition module 402 may be configured to acquire a model image selected by the user, synthesize the first image information and the model image to obtain the second image information, and use the second image information as the target expression information.

In some embodiments, the second acquisition module 402 may be configured to extract feature information of the user from the first image information, and add the feature information of the user to an image area selected by the user in the model image.

In some examples, the second acquisition module 402 may be configured to acquire image parameters of the first image information, adjust the image parameters to target parameters set by the user in order to obtain the second image information and use the second image information as the target expression information.

With the apparatus, it is able to avoid that a large amount of time for searching is required in related art to input expression information and thus can solve a technical problem of low efficiency of inputting expression information by acquiring target feature information of a user, the target feature information including at least one of the following items: facial feature information and limb feature information, acquiring target expression information corresponding to the target feature information, and acquiring target expression information corresponding to the target feature information.

With respect to the apparatus of the above embodiment, the specific mode in which each module performs the operation has been described in detail in the embodiment relating to the method, and the description thereof will not be described in detail herein.

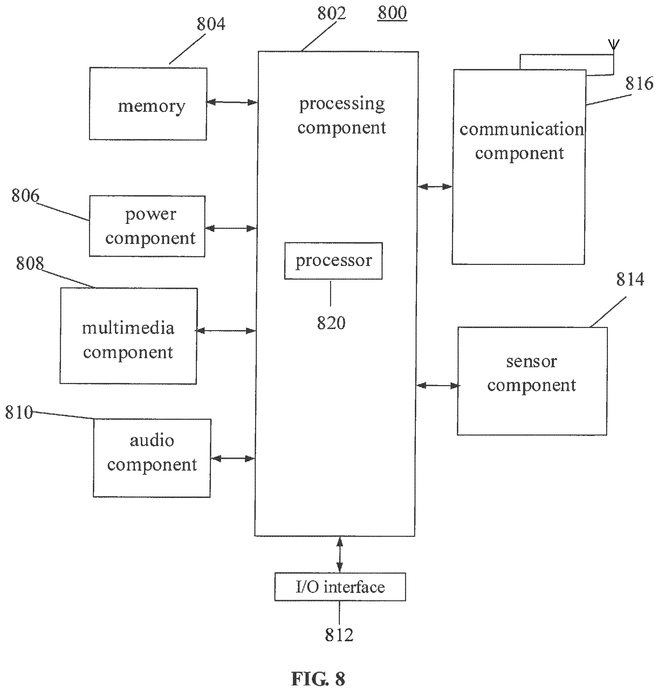

Figure 8 is a block diagram of a device 800 for inputting expression information according to an exemplary embodiment. For example, the device 800 may be a mobile phone, a computer, a digital broadcast terminal, a messaging device, a gaming console, a tablet, a medical device, an exercise equipment, a personal digital assistant, and the like.

As shown in Figure 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods for inputting expression information. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swiping action, but also sense a period of time and a pressure associated with the touch or swiping action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for inputting expression information.

In exemplary embodiments, there is also provided a non-transitory computer-readable storage medium including instructions, such as included in the memory 804, executable by the processor 820 in the device 800, for performing the above-described methods for inputting expression information. For example, the non-transitory computer-readable storage medium may be a ROM, a RAM, a CD-ROM, a magnetic tape, a floppy disc, an optical data storage device, and the like.

Other embodiments of the present disclosure will be readily apparent to those skilled in the art upon consideration of the specification and practice of the disclosure disclosed herein. The present application is intended to cover any variations, uses, or adaptations of the present disclosure that follow the general principles of the present disclosure and include the common general knowledge or conventional technical means in the art without departing from the present disclosure The specification and examples are to be regarded as illustrative only, and the true scope of the disclosure is indicated by the following claims.

It is to be understood that this disclosure is not limited to the precise constructions described above and shown in the accompanying drawings, and that various modifications and changes may be made without departing from the scope thereof. The scope of the present disclosure is limited only by the appended claims.

## Claims

1. A method for inputting expression information, comprising:
acquiring (201, 301) first image information of a user; and further comprising:
acquiring (101) target feature information of the user from the first image information, the target feature information including at least one of the following items: facial feature information and limb feature information;
acquiring (102) target expression information corresponding to the target feature information based on a target database including a correspondence relationship between feature information of the user and expression information; and
inputting (103, 205, 305) the target expression information;
**characterized by** in the case that the target database does not comprise a correspondence relationship between the target feature information and the target expression information, acquiring the target expression information comprises:
acquiring a model image selected by the user;
extracting feature information of the user from the first image information;
adding the feature information of the user to an image area selected by the user in the model image.

2. The method according to claim 1, wherein said acquiring target information comprises:
acquiring the target information through a capturing device; or
acquiring the target information through a selection by the user from a local database.

3. An apparatus for inputting expression information (400), **characterized by** comprising modules configured to perform respective steps in a method for inputting expression information according to any one of claims 1 and 2.

4. The apparatus for inputting expression information according to claim 3, further, comprising:
a processor (820);
a memory (804) for storing instructions executable by the processor;
wherein the processor is configured to perform the functions of the modules of claim 3 when instructions are executed.

5. A computer program including instructions for executing the steps of a wireless local area network based positioning method according to any one of claims 1 and 2 when said program is executed by a computer.

6. A recording medium readable by a computer and having recorded thereon a computer program including instructions for executing the steps of a wireless local area network based positioning method according to any one of claims 1 and 2.

## Patentansprüche

1. Verfahren zur Eingabe von Ausdrucksinformationen, umfassend:
Erfassen (201, 301) von ersten Bildinformationen eines Benutzers; und weiter umfassend:
Erfassen (101) von Zielmerkmalsinformationen des Benutzers aus den ersten Bildinformationen, wobei die Zielmerkmalsinformationen mindestens eines der folgenden Elemente aufweisen: Gesichtsmerkmalsinformationen und Extremitäten-Merkmalsinformationen;
Erfassen (102) von Zielausdrucksinformationen entsprechend der Zielmerkmalsinformationen basierend auf einer Zieldatenbank, die eine Korrespondenzbeziehung zwischen Merkmalsinformationen des Benutzers und Ausdrucksinformationen aufweist; und
Eingeben (103, 205, 305) der Zielausdrucksinformationen;
**dadurch gekennzeichnet, dass**
in dem Fall, dass die Zieldatenbank keine Korrespondenzbeziehung zwischen den Zielmerkmalsinformationen und den Zielausdrucksinformationen umfasst, das Erfassen der Zielausdrucksinformationen umfasst:
Erfassen eines durch den Benutzer ausgewählten Modellbildes;
Extrahieren von Merkmalsinformationen des Benutzers aus den ersten Bildinformationen;
Hinzufügen der Merkmalsinformationen des Benutzers zu einem Bildbereich, der von dem Benutzer in dem Modellbild ausgewählt wurde.

2. Verfahren nach Anspruch 1, wobei das Erfassen von Zielinformationen umfasst:
Erfassen der Zielinformationen durch eine Erfassungsvorrichtung; oder
Erfassen der Zielinformationen durch eine Auswahl durch den Benutzer aus einer lokalen Datenbank.

3. Vorrichtung zur Eingabe von Ausdrucksinformationen (400), **gekennzeichnet durch** das Aufweisen von Modulen, die konfiguriert sind, um entsprechende Schritte in einem Verfahren zur Eingabe von Ausdrucksinformationen nach einem der Ansprüche 1 und 2 durchzuführen.

4. Vorrichtung zur Eingabe von Ausdrucksinformationen nach Anspruch 3, weiter umfassend:
einen Prozessor (820);
einen Speicher (804) zum Speichern von Anweisungen, die durch den Prozessor ausführbar sind;
wobei der Prozessor konfiguriert ist, um die Funktionen der Module nach Anspruch 3 durchzuführen, wenn Anweisungen ausgeführt werden.

5. Computerprogramm, aufweisend Anweisungen zum Ausführen der Schritte eines Positionierungsverfahrens auf Basis eines drahtlosen lokalen Netzes nach einem der Ansprüche 1 und 2, wenn das Programm durch einen Computer ausgeführt wird.

6. Aufzeichnungsmedium, das von einem Computer lesbar ist und auf dem ein Computerprogramm aufgezeichnet ist, das Anweisungen zum Ausführen der Schritte eines Positionierungsverfahrens auf Basis eines drahtlosen lokalen Netzes nach einem der Ansprüche 1 und 2 aufweist.

## Revendications

1. Procédé d'entrée d'informations d'expression, comprenant :
l'acquisition (201, 301) de premières informations d'image d'un utilisateur; et comprenant en outre :
l'acquisition (101) d'informations de caractéristiques cibles de l'utilisateur à partir des premières informations d'image, les informations de caractéristiques cibles incluant au moins un des éléments suivants : des informations de caractéristiques de visage et des informations de caractéristiques de membre ;
l'acquisition (102) d'informations d'expression cibles correspondant aux informations de caractéristiques cibles sur la base d'une base de données cible incluant une relation de correspondance entre des informations de caractéristiques de l'utilisateur et des informations d'expression ; et
l'entrée (103, 205, 305) des informations d'expression cibles ;
**caractérisé en ce que**,
dans le cas où la base de données cible ne comprend pas une relation de correspondance entre les informations de caractéristiques cibles et les informations d'expression cibles, l'acquisition des informations d'expression cibles comprend :
l'acquisition d'une image de modèle sélectionnée par l'utilisateur ;
l'extraction d'informations de caractéristiques de l'utilisateur à partir des premières informations d'image ;
l'ajout des informations de caractéristiques de l'utilisateur à une zone d'image sélectionnée par l'utilisateur dans l'image de modèle.

2. Procédé selon la revendication 1, dans lequel ladite acquisition d'informations cibles comprend :
l'acquisition des informations cibles par l'intermédiaire d'un dispositif de capture ; ou
l'acquisition des informations cibles par l'intermédiaire d'une sélection par l'utilisateur à partir d'une base de données locale.

3. Appareil pour entrer des informations d'expression (400), **caractérisé en ce qu'**il comprend des modules configurés pour réaliser des étapes respectives dans un procédé pour entrer des informations d'expression selon l'une quelconque des revendications 1 et 2.

4. Appareil pour entrer des informations d'expression selon la revendication 3, comprenant en outre :
un processeur (820) ;
une mémoire (804) pour stocker des instructions exécutables par le processeur ;
dans lequel le processeur est configuré pour réaliser les fonctions des modules selon la revendication 3 lorsque des instructions sont exécutées.

5. Programme informatique incluant des instructions pour exécuter les étapes d'un procédé de positionnement basé sur un réseau local sans fil selon l'une quelconque des revendications 1 et 2 lorsque ledit programme est exécuté par un ordinateur.

6. Support d'enregistrement lisible par un ordinateur et sur lequel est enregistré un programme informatique incluant des instructions pour exécuter les étapes d'un procédé de positionnement basé sur un réseau local sans fil selon l'une quelconque des revendications 1 et 2.
